(19) Europäisches Patentamt
European Patent Office
Office européen des brevets

(11) **EP 2 835 186 B1**

(12) **EUROPEAN PATENT SPECIFICATION**

(45) Date of publication and mention
of the grant of the patent:
**14.12.2016 Bulletin 2016/50**

(51) Int Cl.:
**B21B 35/14** *(2006.01)*

(21) Application number: **14179752.2**

(22) Date of filing: **04.08.2014**

(54) **Spindle unit for rolling mill**

Spindeleinheit für ein Walzwerk

Unité de broche pour laminoir

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.08.2013 JP 2013162613**

(43) Date of publication of application:
**11.02.2015 Bulletin 2015/07**

(73) Proprietor: **JTEKT Corporation
Osaka-shi
Osaka 542-8502 (JP)**

(72) Inventor: **Komeyama, Nobuo
Osaka-shi, Osaka, 542-8502 (JP)**

(74) Representative: **Winter, Brandl, Fürniss, Hübner,
Röss, Kaiser, Polte - Partnerschaft mbB
Patent- und Rechtsanwaltskanzlei
Alois-Steinecker-Strasse 22
85354 Freising (DE)**

(56) References cited:
**EP-A2- 1 460 295     JP-A- H07 256 311**

**Description**

BACKGROUND OF THE INVENTION

1. Field of the Invention

The invention relates to a spindle unit for a rolling mill.

2. Description of Related Art

For example, a rolling mill for rolling an iron or steel material includes a pair of upper and lower rolls, a drive source, and a spindle unit. The drive source rotates the upper and lower rolls in opposite directions. The spindle unit is disposed between the rolls and the drive source. The spindle unit includes a pair of upper and lower drive shafts, a pair of upper and lower yokes, and a pair of cross joints. The drive shafts are rotated by the drive source. The cross joins couple the drive shafts and rotary shafts of the rolls to each other via the yokes. The spindle unit is configured to transmit the rotations of the drive shafts to the rolls in a state where the cross joints allow the rolls to move up and down with respect to a steel material under rolling (refer to, for example, Japanese Patent Application Publication 2000-42614). Additionally the current state of the art is known, namely a cross shaft mill which refers to JP H07 256311 A (on which the preamble of claim 1 is based) and a cross roll mill that refers to EP 1 460 295 A2.

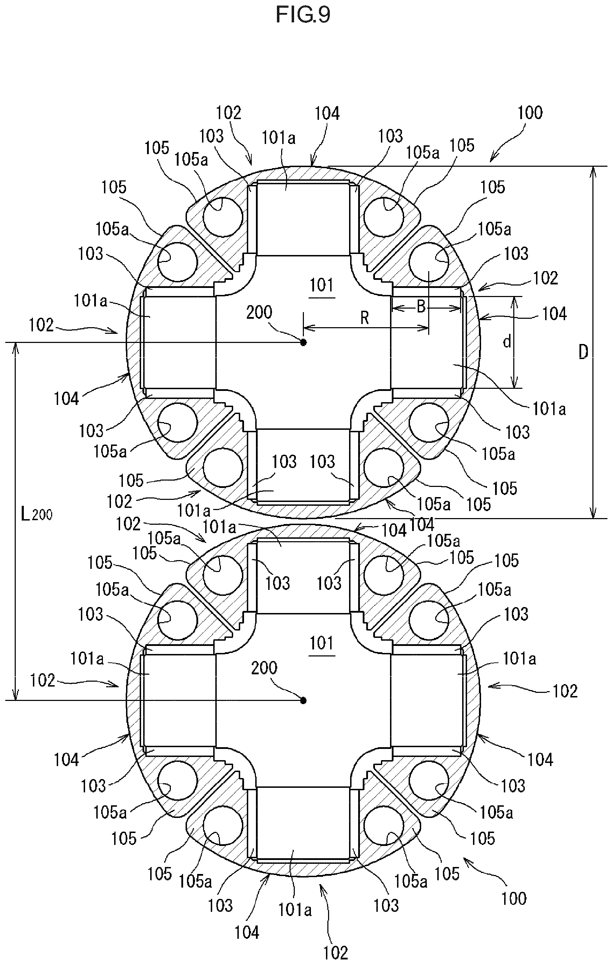

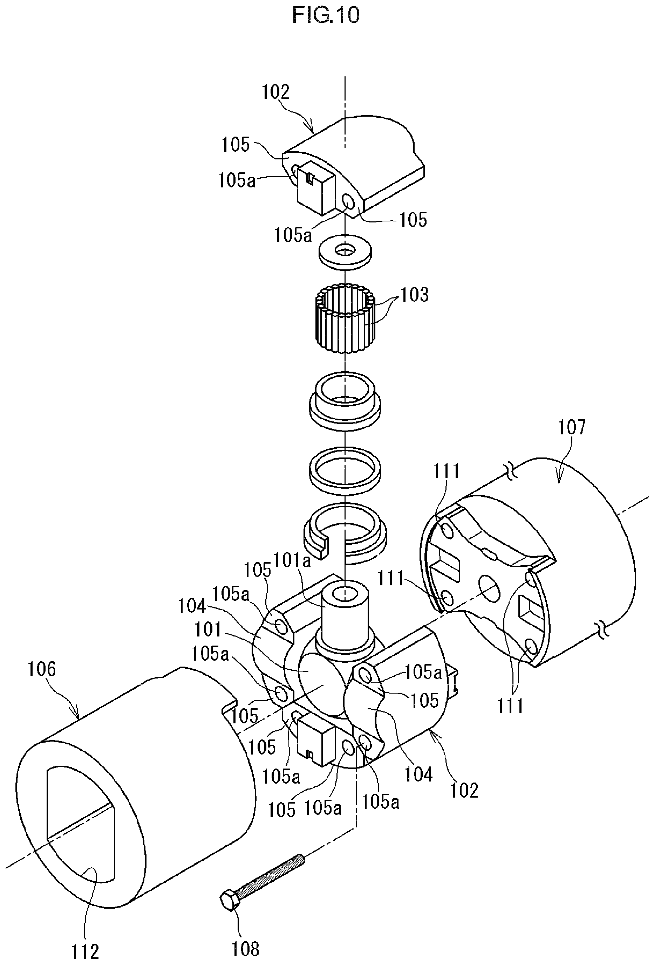

FIG. 9 is a sectional view that illustrates a pair of conventional cross joints 100. FIG. 10 is an exploded perspective view illustrating the cross joints 100. As illustrated in FIG. 9 and FIG. 10, the cross joints 100 are disposed close to each other in the up-down direction. Each of the cross joints 100 includes a joint spider 101 and four bearings 102. Each joint spider 101 has four shaft portions 101a arranged in a cross shape as a whole and is rotatable about a central axis 200. Each of the bearings 102 includes cylindrical rollers 103 and a bearing cup 104. The cylindrical rollers 103 are rolling elements that roll on the outer peripheral face of the shaft portion 101a. The bearing cup 104 is fitted onto the shaft portion 101a via the cylindrical rollers 103. Bearing holders 105 are formed integrally with the bearing cup 104. Each bearing holder 105 has a generally sector sectional shape of which the center (the center of a circle including the sector) coincides with the central axis 200, and located outward of the shaft portion 10 1 a in the radial direction of the shaft portion 101a.

Insertion holes 105a, through which bolts 108 are passed, are formed in the bearing holders 105. The bolts 108 passed through the insertion holes 105a are screwed into threaded holes 111 formed in one end faces of a pair of yokes 106, 107. At this time, a pair of the bearing holders 105 arranged on a vertical shaft formed of two of the four shaft portions 101a of the joint spider 101, the two shaft portions 101a being arranged on a straight line, is fixedly connected to the yoke 106. Further, a pair of the bearing holders 105 arranged on a transverse shaft formed of the other two of the four shaft portions 101a of the joint spider 101, the two shaft portions 101a being arranged on a straight line, is fixedly connected to the yoke 107. Fitting holes 112 having a capsule sectional shape are formed respectively in the other end faces of the yokes 106, 107. A rotary shaft of the roll is press-fitted in the fitting hole 112 of the yokes106. One end portion of the drive shaft is press-fitted in the fitting hole 112 of the yoke 107. Thus, (rotary) torque is transmitted from the drive shaft to the roll via the yoke 107, the cross joint 100, and the yoke 106.

In general, a flaking life L of the cross joint 100 is calculated according to Formula (1) in which a rated torque Tr is used.

$$L = 3000 \cdot Km \cdot (Tr \cdot Ks \cdot k\alpha \, / \, Tm)^{2.907} \qquad (1)$$

In Formula (1), Km is a material coefficient, Ks is a velocity coefficient, k$\alpha$ is an angular coefficient, and Tm is an average torque. Thus, the flaking life L is increased by increasing the value of the rated torque Tr.
The rated torque Tr is usually calculated according to Formula (2).

$$Tr = (d \cdot B \cdot R)^{0.992} \, / \, 154.5 \qquad (2)$$

In Formula (2), d is the diameter of each shaft portion 101a of the joint spider 101 (raceway diameter), B is an effective contact length of each cylindrical roller 103, and R is an action radius (the distance from the center of the joint spider 101 to the axial center of each cylindrical roller 103) (refer to FIG. 9). In view of Formula (2), in order to increase the value of the rated torque Tr, it is necessary to set the values of the diameter d of each shaft portion 101a, the effective contact length B of each cylindrical roller 103 and the action radius R such that the cross joints 100 disposed close to each other in the up-down direction do not make contact with each other. Thus, in the case of increasing the diameter d of each shaft portion 101a in order to increase the value of the rated torque Tr, the following problems may occur because the outer diameter D of the cross joint 100 is not allowed to be increased.

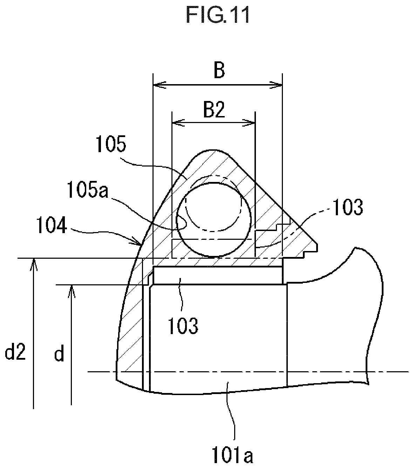

Because each bearing holder 105 has a generally sector sectional shape and is located outward of the shaft portion 101a in the radial direction of the shaft portion 101a, if the diameter d of the shaft portion 101a is increased up to a diameter d2 as illustrated in FIG. 11, the sectional area of the bearing holder 105 is reduced. Thus, if the diameter d is set to d2, an effective contact length B2 of each cylindrical roller 103 is smaller than the effective contact length B in the case where the diameter of each shaft portion 101 a is set to the diameter d. As a result, it is not possible to increase the value of the rated torque Tr. Consequently, it is not possible to increase the flaking life L of the cross joint 100.

In order to increase the rated torque Tr, the outer peripheral face of each bearing cup 104 may be projected radially outward to increase the effective contact length B. However, as is clear from FIG. 9, if the outer peripheral face of each bearing cup 104 is projected radially outward, the outer peripheral faces of the bearing cups 104 of the paired cross joints 100, which are disposed close to each other in the up-down direction, make contact with each other. Thus, the effective contact length B is not allowed to be increased.

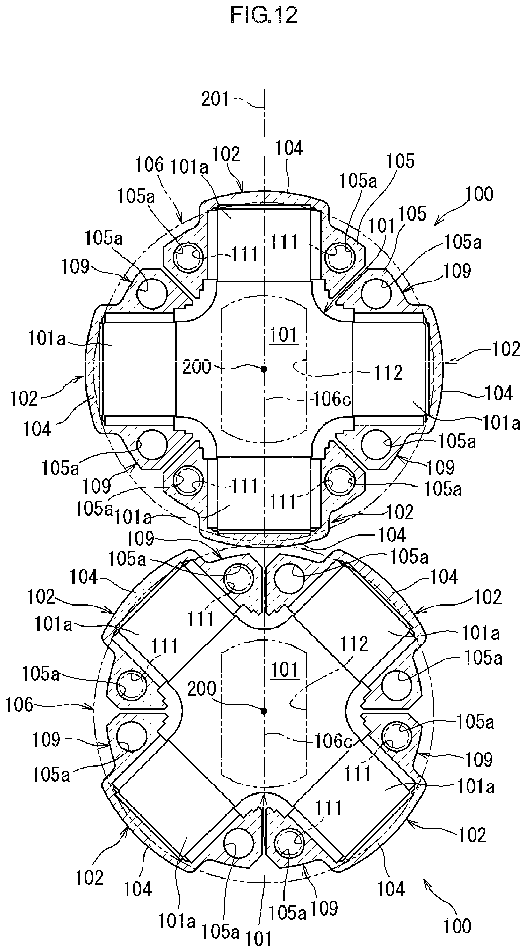

Therefore, as illustrated in FIG. 12, the applicant has already proposed a spindle unit for a rolling mill, in which recessed portions 109 are defined between the adjacent bearing cups 104 of each of the cross joints 100, and the outer peripheral face of one of the bearing cups 104 of one of the cross joints 100 is inserted in one of the recessed portions 109 of the other one of the cross joints 100 (refer to Japanese Patent Application No. 2013-058992, which will be referred to as "earlier application"). In the earlier application, because one of the bearing cups 104 of one of the cross joints 100 is inserted in one of the recessed portions 109 of the other one of the cross joints 100, the axial length of each shaft portion 101a of each of the cross joints 100 may be longer than that of the shaft portion in the conventional spindle unit. Thus, even if the value of the diameter d in the right side of Formula (2) is not increased, the value of the effective contact length B is increased and thus the value of the rated torque Tr is increased. As a result, it is possible to increase a value obtained through calculation in which the rated torque Tr in the right side of Formula (1) is used. As a result, it is possible to increase the flaking life L of the cross joints 100.

However, as illustrated in FIG. 12, the fitting holes 112 of the upper and lower yokes 106 that are connected respectively to the upper and lower rolls are formed in such a manner that longitudinal central lines 106c of the fitting holes 112 are aligned with each other under the condition that a central axis 201 of a pair of the coaxially arranged shaft portions 101a of the cross joint 100 located on the upper side in FIG. 12 is set on a vertical line. Thus, the yokes 106 differ from each other in formation positions of the fitting holes 112 with respect to the threaded holes 111. Thus, the upper and lower yokes 106 are not interchangeable with each other. Thus, it is necessary to prepare two kinds of spare yokes 106 that differ from each other in formation positions of the fitting holes 112. As a result, the cost for purchasing spare components increases.

## SUMMARY OF THE INVENTION

One object of the invention is to provide a spindle unit for a rolling mill, which is configured such that, even when one of cross joints in one pair is disposed to enter a recessed portion of the other one of the cross joints, yokes in one pair are interchangeable with each other.

An aspect of the invention relates to a spindle unit for a rolling mill including: a pair of upper and lower drive shafts disposed between a pair of upper and lower rolls and a drive source that rotates the rolls in opposite directions; a pair of upper and lower cross joints disposed between the rolls and the roll-side paired end portions of the drive shafts, or between the drive source and the drive source-side paired end portions of the drive shafts; and a pair of upper and lower tubular yokes each having a connection portion formed at one axial end portion of the corresponding yoke and connected to a corresponding one of the cross joints, and each having a fitting hole into which another member is press-fitted, the fitting hole being formed in the other axial end portion of the corresponding yoke and the fitting hole having a non-circular sectional shape around an axis of the corresponding yoke. Each of the cross joints includes a joint spider that has four shaft portions arranged in a cross shape as a whole, the joint spider being rotatable about a central axis that coincides with the axis of the corresponding yoke, a plurality of rolling elements that roll on outer peripheral faces of the shaft portions, four bottomed cylinder-shaped bearing cups fitted respectively on the shaft portions via the rolling elements, and bearing holders having fitting portions that are disposed between the bearing cups adjacent to each other and to which the connection portion of the corresponding yoke is fitted. Recessed portions are defined between the adjacent bearing cups of each of the cross joints such that outer faces of the fitting portions are recessed toward the central axis from outer faces of bottom portions of the bearing cups. The cross joints are disposed with a prescribed phase difference in a rotational direction around the central axis such that the outer face of one of the bearing cups of one of the cross joints is inserted in one of the recessed portions of the other one of the cross joints. The yokes are formed such that formation positions of the fitting holes with respect to the connection portions coincide with each other.

BRIEF DESCRIPTION OF THE DRAWINGS

The foregoing and further features and advantages of the invention will become apparent from the following description of example embodiments with reference to the accompanying drawings, wherein like numerals are used to represent like elements and wherein:

FIG. 1 is a schematic side view of a rolling mill provided with a spindle unit for a rolling mill according to an embodiment of the invention;
FIG. 2 is an exploded perspective view of a cross joint and yokes of the spindle unit for a rolling mill;
FIG. 3 is a sectional view illustrating a pair of the cross joints, taken along the line A-A in FIG. 1;
FIG. 4 is an enlarged sectional view illustrating a bearing of the cross joint;
FIG. 5 is a plan view illustrating the bearing;
FIG. 6 is a sectional view illustrating the state achieved by rotating the cross joints in the opposite directions by a prescribed angle from the positions of the cross joints in FIG. 3;
FIG. 7 is a sectional view illustrating a modified example of the fitting holes of the yokes;
FIG. 8 is a sectional view illustrating a torque limiter of the spindle unit for a rolling mill;
FIG. 9 is a sectional view illustrating a pair of conventional cross joints;
FIG. 10 is an exploded perspective view illustrating the conventional cross joint and conventional yokes;
FIG. 11 is an enlarged sectional view illustrating main portions of the conventional cross joint; and
FIG. 12 is a sectional view illustrating a pair of cross joints in the earlier application.

DETAILED DESCRIPTION OF EMBODIMENTS

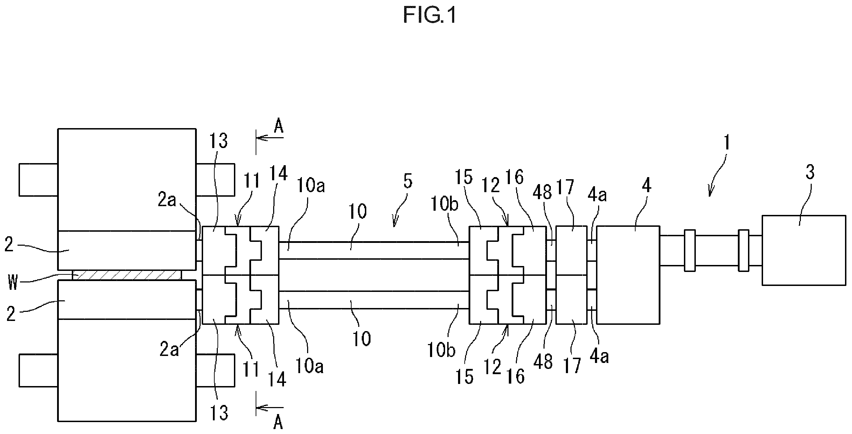

Hereinafter, example embodiments of the invention will be described with reference to the accompanying drawings. FIG. 1 is a schematic side view illustrating a rolling mill 1 including a spindle unit 5 for a rolling mill according to an embodiment of the invention. As illustrated in FIG. 1, the rolling mill 1 in the present embodiment is a steel rolling mill for rolling, for example, a steel material W. The rolling mill 1 includes a pair of upper and lower rolls 2, a motor 3, a speed reducer 4 and the spindle unit 5 for a rolling mill. The motor 3 is a drive source for rotating the rolls 2 in opposite directions. The speed reducer 4 reduces the speed of rotation output from the motor 3. The spindle unit 5 for a rolling mill is disposed between the rolls 2 and the speed reducer 4.
The spindle unit 5 for a rolling mill is configured to transmit rotary torques output from output shafts 4a of the speed reducer 4 to rotary shafts 2a of the rolls 2 in a state where the rolls 2 are allowed to move up and down with respect to the steel material W under rolling. The spindle unit 5 for a rolling mill includes a pair of drive shafts 10 that rotate the respective rolls 2. Further, the spindle unit 5 for a rolling mill includes a pair of upper and lower first cross joints 11 and a pair of upper and lower second cross joints 12. The first cross joints 11 are respectively disposed between the rolls 2 and the rolls 2-side paired end portions 10a of the drive shafts 10. The second cross joints 12 are respectively disposed between the speed reducer 4 and the speed reducer 4-side paired end portions 10b of the drive shafts 10.
The spindle unit 5 for a rolling mill includes a pair of upper and lower first yokes 13, a pair of upper and lower second yokes 14, a pair of upper and lower third yokes 15 and a pair of upper and lower fourth yokes 16. The first yokes 13 and the second yokes 14 are connected to respectively to the axially opposite sides of the first cross joints 11. The third yokes 15 and the fourth yokes 16 are connected respectively to the axially opposite sides of the second cross joints 12. The first yokes 13 connect the first cross joints 11 to the rotary shafts 2a of the rolls 2. The second yokes 14 connect the first cross joints 11 to the end portions 10a of the drive shafts 10. The third yokes 15 connect the second cross joints 12 to the end portions 10b of the drive shafts 10. The fourth yokes 16 connect the second cross joints 12 to coupling shafts 48 of torque limiters 17 (described later).
Thus, the rotary torques output from the output shafts 4a of the speed reducer 4 are transmitted to the drive shafts 10 via the fourth yokes 16, the second cross joints 12 and the third yokes 15. Then, the rotary torques output from the drive shafts 10 are transmitted to the rotary shafts 2a of the rolls 2 via the second yokes 14, the first cross joints 11 and the first yokes 13. Note that the first cross joints 11 and the second cross joints 12 have the same configurations, and the first and second yokes 13, 14, and the third and fourth yokes 15, 16 have the same configurations. Thus, in the present embodiment, only the first cross joints 11 and the first and second yokes 13, 14 will be described in detail.

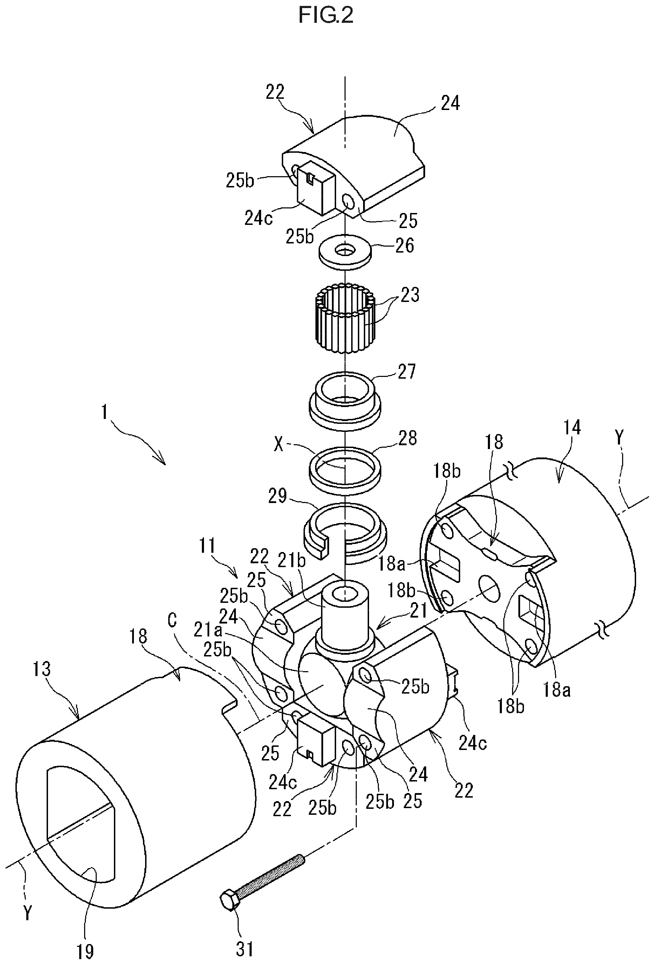

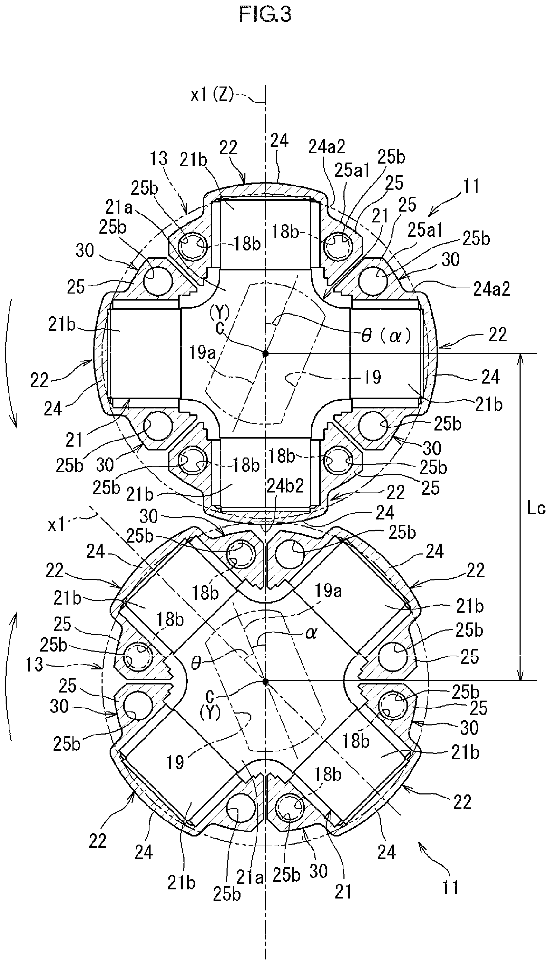

FIG. 2 is an exploded perspective view that illustrates the configuration for establishing connection between the first cross joint 11 and the first and second yokes 13, 14 in the spindle unit 5 for a rolling mill. FIG. 3 is a sectional view illustrating a pair of the first cross joints 11 taken along the line A-A in FIG. 1 As illustrated in FIG. 2 and FIG. 3, each of the first cross joints 11 includes a joint spider 21 and four bearings 22. The joint spider 21 has four shaft portions 21b arranged in a cross shape as a whole. The four bearings 22 are fitted to the respective shaft portions 21b. The joint spider 21 has a body portion 21a located at its center, and the four shaft portions 21b. The four shaft portions 21b are extended from the body portion 21 a in four directions which are orthogonal to each other. The joint spider 21 is rotatable about a central axis C that passes through the center of the body portion 21a.

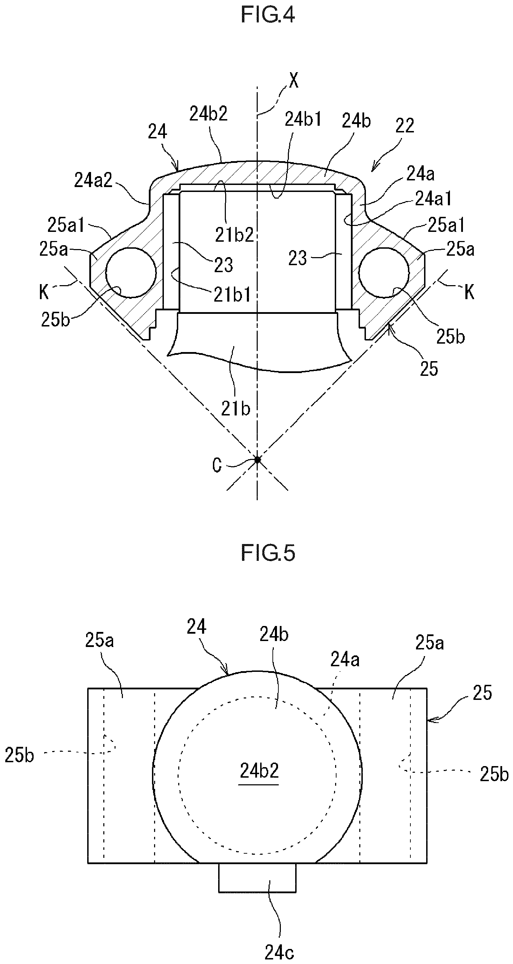

FIG. 4 is an enlarged sectional view that illustrates the bearing 22 of the first cross joint 11. FIG. 5 is a plan view that illustrates the bearing 22. As illustrated in FIG. 4 and FIG. 5, each bearing 22 includes a plurality of cylindrical rollers (rolling elements) 23, a bearing cup 24 and a bearing holder 25. The cylindrical rollers 23 are disposed so as to be reliable on an outer peripheral face 21b1 of the corresponding shaft portion 21b. The bearing cup 24 is formed in bottomed cylinder-shape. The bearing cup 24 has a cylindrical portion 24a and a bottom portion 24b that closes one axial end of the cylindrical portion 24a.

The cylindrical portion 24a of the bearing cup 24 is fitted on the outer peripheral face 21b1 of the shaft portion 21b via the cylindrical rollers 23. Thus, the cylindrical rollers 23 roll on an inner peripheral face 24a1 of the cylindrical portion 24a, which serves as an outer raceway, and the outer peripheral face 21b1 of the shaft portion 21b, which serves as an inner raceway. Thus, the bearing cup 24 is rotatable about a central axis X of the shaft portion 21b. As illustrated in FIG. 2, a thrust washer 26 is disposed on one axial side of the cylindrical rollers 23. A roller guide 27, an oil seal 28 and a slinger 29 are arranged in the stated order on the other axial side of the cylindrical rollers 23. Note that the thrust washer 26, the roller guide 27, the oil seal 28 and the slinger 29 are not illustrated in FIG. 3 and FIG. 4.

As illustrated in FIG. 2, a fitting protrusion 24c is integrally formed with and projected from a portion of the cylindrical portion 24a of the bearing cup 24. As illustrated in FIG. 4, an inner face 24b1 of the bottom portion 24b of the bearing cup 24 is opposed to an end face 21b2 of the shaft portion 21b. An outer face 24b2 of the bottom portion 24b is formed in a circular-arc shape of which the center (the center of a circle having the circular arc) coincides with the central axis C of the joint spider 21.

As illustrated in FIG. 2 and FIG. 3, the four bearing holders 25 of the bearings 22 are used to couple a transverse shaft and a vertical shaft of the joint spider 21, each of which is formed of two shaft portions 21b aligned on one straight line, respectively to the first yoke 13 and the second yoke 14. As illustrated in FIG. 4 and FIG. 5, the bearing holder 25 in the present embodiment is formed of a pair of fitting portions 25a aligned on one straight line with the bearing cup 24 interposed therebetween as viewed in a planar view. As illustrated in FIG. 3, each of the fitting portions 25a of one bearing holder 25 is located between the bearing cups 24 that are adjacent to each other, along with one of the fitting portions 25a of another bearing holder 25 that is adjacent to the one bearing holder 25.

As illustrated in FIG. 4 and FIG. 5, each of the fitting portions 25a has an insertion hole 25b through which a bolt 31 (see FIG. 2) is passed. The insertion hole 25b extends through the fitting portion 25a in its thickness direction. The fitting portions 25a are integrally formed with the outer periphery of the cylindrical portion 24a. Each fitting portion 25a is formed in a generally sector sectional shape of which the center coincides with the central axis C of the joint spider 21. Specifically, each fitting portion 25a is formed in a generally sector sectional shape located in an angular region extending from the outer periphery of the cylindrical portion 24a to an imaginary line K that is tilted by an angle of 45° with respect to the central axis X of the shaft portion 21b.

Each of the fitting portions 25a has a circular arc-shaped outer face 25a1 of which the center coincides with the central axis C. The outer face 25a1 is formed so as to be recessed toward the central axis C with respect to the outer face 24b2 of the bottom portion 24b of the bearing cup 24. Thus, as illustrated in FIG. 3, a recessed portion 30 is defined, between the adjacent bearing cups 24, by the outer faces 25a1 of the two fitting portions 25a and outer peripheral faces 24a2 of the cylindrical portions 24a of the adjacent bearing cups 24. Note that the bearing holders 25 may be formed, independent from the bearing cups 24 although the bearing holders 25 in the present embodiment are integrally formed with the outer peripheries of the cylindrical portions 24a of the bearing cups 24.

As illustrated in FIG. 3, the paired first cross joints 11 are arranged with a prescribed phase difference (45° in the present embodiment) in the rotational directions around the central axes C. Note that the phase difference means an angular difference about the central axes C, between the direction of a straight line on which two of the shaft portions 21b of one of the joint spiders 21 are aligned and the direction of a straight line on which two of the shaft portions 21b of the other one of the joint spiders 21 are aligned, in a state where the central axes C of the joint spiders 21 of the paired first cross joints 11 are aligned on the same straight line.

Further, the paired first cross joints 11 are arranged in such a manner that the outer face 24b2 of one of the bottom portions 24b of one of the bearing cups 24 of the one of the first cross joints 11 is inserted in one of the recessed portions 30 of the other one of the first cross joints 11. In the present embodiment, the outer face 24b2 of one of the bottom portions 24b of one of the first cross joints 11 is inserted in one of the recessed portions 30 of the other one of the first cross joints 11, whereby a distance Lc between the central axes C of the first cross joints 11 is set shorter than the distance $L_{200}$ between the central axes of the conventional cross joints 100.

With the above-described configuration, in the spindle unit 5 for a rolling mill in the present embodiment, the paired first cross joints 11 are disposed such that the distance between the first cross joints 11 is shorter than that between the paired conventional cross joints. Thus, the paired first cross joints 11 require smaller space. Further, because the phase difference is set to 45° as described above, the paired first cross joints 11 are allowed to rotate stably without making contact with each other.

In the present embodiment, the outer face 24b2 of one of the bottom portions 24b of one of the paired first cross joints 11 is inserted in one of the recessed portions 30 of the other one of the first cross joints 11, whereby the distance Lc between the central axes C is set short. However, the distance Lc need not be changed. That is, the shaft portions 21b of the joint spiders 21 of the paired first cross joints 11 are set to be longer in the directions of the central axes X than the shaft portions of the conventional cross joints. With this configuration, the outer face 24b2 of one of the bottom portions 24b of one of the paired first cross joints 11 is allowed to be inserted in one of the recessed portions 30 of the other one of the paired first cross joints 11. In this case, the effective contact length of the cylindrical rollers 23 can be increased without changing the diameter of the shaft portions 21b, unlike in the related art. As a result, the rated torque can be increased, and it is therefore possible to increase the flaking life of the first cross joints 11.

As illustrated in FIG. 2, the first yoke 13 is connected to a pair of the bearing holders 25 arranged on the vertical shaft formed of two of the four shaft portions 21b of the joint spider 11, the two shaft portions 21b being arranged on a straight line. The second yoke 14 is connected to a pair of the bearing holders 25 arranged on the transverse shaft formed of the other two of the four shaft portions 21b of the joint spider 11, the two shaft portions 21b being arranged on a straight line. The first and second yokes 13, 14 are formed in a bottomed cylinder shape. An axis Y of the yokes 13, 14 is set to be coincident with the central axis C of the joint spider 21 of the first cross joint 11.

Connection portions 18 that are connected to the bearing holders 25 of the first cross joint 11 are respectively formed integrally with the first and second yokes 13, 14 so as to protrude from one end faces of the yokes 13, 14 in the direction of the axis Y (one end faces on the first cross joint 11 side). The connection portions 18 are each formed in a generally H-shape. Two recessed portions 18a are formed in the one end face of each connection portion 18 with a center portion of the one end face interposed between the recessed portions 18a. Each recessed portion 18a has such dimensions that the protrusion 24c of the bearing cup 24 is fitted into the recessed portion 18a. Each connection portion 18 has four (in total) threaded holes 18b into which the bolts 31 passed through the insertion holes 25b of the fitting portions 25a of the bearing holders 25 are screwed. Two threaded holes 18b are located on the opposite sides of each recessed portion 18a in the circumferential direction.

Fitting holes 19 are formed in the other end faces of the first and second yokes 13, 14 in the direction of the axis Y (the end faces on the opposite side of the first and second yokes 13, 14 from the first cross joint 11). The fitting holes 19 each have a capsule sectional shape around the axis Y, that is, a non-circular sectional shape. The rotary shaft 2a of the roll 2, which is another member, is press-fitted in the fitting hole 19 of the first yoke 13. The end portion 10a of the drive shaft 10, which is another member, is press-fitted in the fitting hole 19 of the second yoke 14. Thus, the first yoke 13 and the second yoke 14 are rotated together with the first cross joint 11 about the central axis C (axis Y) in association with the rotation of the drive shaft 10 to transmit rotary torque to the roll 2.

As illustrated in FIG. 3, the upper and lower first yokes 13 are configured such that formation positions of the fitting holes 19 with respect to the threaded holes 18b of the connection portions 18 coincide with each other. Specifically, the fitting holes 19 of the first yokes 13 are formed such that longitudinal central lines 19a (prescribed central lines) thereof are tilted by a prescribed angle θ with respect to corresponding central axes x1 of the two shaft portions 21b on which the paired bearing holders 25, to which the corresponding yoke 13 are connected, are disposed, in the same direction (clockwise direction in the present embodiment) about the central axes C. The prescribed angle θ is set to, for example, 22.5 degrees.

Thus, it is possible to form the upper and lower first yokes 13 in the same shape. As a result, the first yokes 13 are interchangeable with each other. Thus, only one kind of the first yokes 13 need to be stocked as spare components. This makes it possible to make the cost for purchasing spare components lower than that in a case where two kinds of spare yokes need to be stocked. Note that the prescribed angle θ need not be limited to 22.5 degrees, and may be set to any angle. However, when the central lines 19a of both the fitting holes 19 are set on a vertical line Z, the prescribed angle θ is preferably set to 22.5 degrees, 67.5 degrees, 112.5 degrees or 157.5 degrees. Although the central lines 19a of the fitting holes 19 are tilted with respect to the central axes x1 in the clockwise direction in FIG. 3, the central lines 19a may be tilted in the counterclockwise direction in FIG. 3. Although the longitudinal central lines 19a are used as the prescribed central lines of the fitting holes 19, lateral central lines may be used as the longitudinal central lines 19a.

As illustrated in FIG. 3, the upper and lower first yokes 13 are disposed in such a manner that the central lines 19a of the fitting holes 19 are tilted by the prescribed angle α in the opposite directions around the central axes C under the condition that the axis x1 of the upper first cross joint 11 in FIG. 3 coincides with the vertical line Z. In the present embodiment, the central line 19a of the fitting hole 19 of the upper first yoke 13 in FIG. 3 is tilted by the prescribed angle α in the clockwise direction in FIG. 3, whereas the central line 19a of the fitting hole 19 of the lower yoke 13 in FIG. 3 is tilted by the prescribed angle α in the counterclockwise direction in FIG. 3. The prescribed angle α is set to, for example, 22.5 degrees.

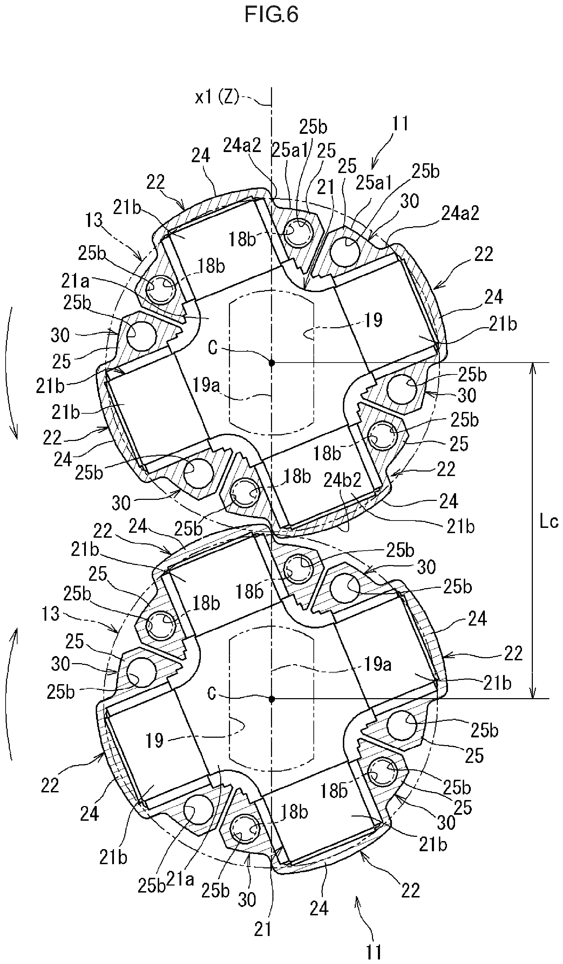

Thus, when the upper and lower first cross joints 11 are rotated together with the first yokes 13 by the prescribed angle α in opposite directions from the positions illustrated in FIG. 3, the state illustrated in FIG. 6 is achieved. That is, when the upper first yoke 13 is rotated in the counterclockwise direction by the prescribed angle α and the lower first yoke 13 is rotated in the clockwise direction by the prescribed angle α from the positions in FIG. 3, the central lines 19a of both the fitting holes 19 coincide with the vertical line Z, as illustrated in FIG. 6. Thus, by stopping the rotation of the upper and lower first yokes 13 in this state, the rotation stop positions of the rolls 2 are made coincident with each other. This makes it possible to facilitate the replacement of the rolls 2.

Note that the prescribed angle $\alpha$ is not limited to 22.5 degrees. The prescribed angle be set to another angle such as 67.5 degrees, 112.5 degrees or 157.5 degrees, if it is possible to make the central lines 19a of both the fitting holes 19 coincident with the vertical line Z. In FIG. 3, the central line 19a of the upper fitting hole 19 is tilted in the clockwise direction with respect to the vertical line Z. However, the central line 19a of the upper fitting hole 19 may be tilted in the counterclockwise direction. In this case, the central line 19a of the lower fitting hole 19 is tilted in the clockwise direction.

In FIG. 3, in the state where the central axis x1 of the upper first cross joint 11 coincides with the vertical line Z, the central lines 19a of the fitting holes 19 are tilted in opposite directions. Alternatively, the central lines 19a of the fitting holes 19 may be tilted in opposite directions in the state where the central axis x1 of the lower first cross joint 11 coincides with the vertical line Z. In FIG. 3, in the state where the central axis x1 of the two shaft portions 21b on which the paired bearing holders 25, to which the first yoke 13 is connected, are disposed coincides with the vertical line Z, the central lines 19a of the fitting holes 19 are tilted in opposite directions. Alternatively, the central lines 19a of the fitting holes 19 may be tilted in opposite directions in the state where the central axis of the other two shaft portions 21b coincides with the vertical line Z.

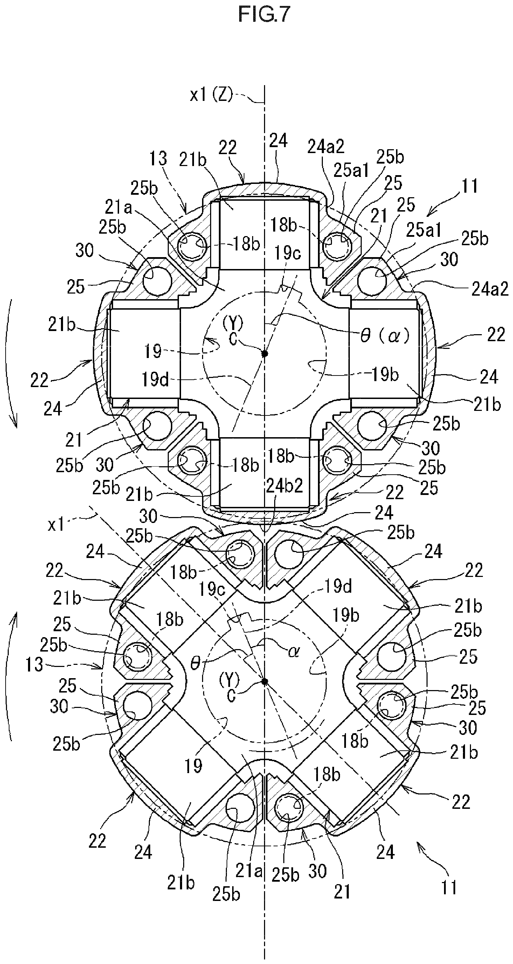

FIG. 7 is a sectional view that illustrates a modified example of the fitting holes 19 of the first yokes 13. As illustrated in FIG. 7, each of the fitting hole 19 has a circular-arc portion 19b defined around the axis Y and a key groove 19c, and has a non-true circular sectional shape. The fitting holes 19 of the upper and lower first yokes 13 are formed such that the central lines 19d (prescribed central lines) of the fitting holes 19, which pass through the centers of the corresponding key grooves 19c and the axes Y, are tilted with respect to the central axes x1 in the same direction (clockwise direction in FIG. 7) about the central axes C by the prescribed angle $\theta$. The prescribed angle $\theta$ is set to, for example, 22.5 degrees as in the case of the fitting holes 19 illustrated in FIG. 3. Thus, even in this modified embodiment, the first yokes 13 are interchangeable with each other.

The upper and lower first yokes 13 are disposed in such a manner that the central lines 19d of the fitting holes 19 are tilted by the prescribed angle $\alpha$ in the opposite directions around the central axes C under the condition that the axis x1 of the upper first cross joint 11 coincides with the vertical line Z. In this modified example, the central line 19d of the fitting hole 19 of the upper first yoke 13 is tilted by the prescribed angle $\alpha$ in the clockwise direction, whereas the central line 19d of the fitting hole 19 of the lower yoke 13 is tilted by the prescribed angle $\alpha$ in the counterclockwise direction. The prescribed angle $\alpha$ is set to, for example, 22.5 degrees as in the case of the fitting holes 19 illustrated in FIG. 3. Thus, even in this modified embodiment, by rotating the upper and lower first cross joints 11 together with the first yokes 13 in opposite directions by the prescribed angle $\alpha$, it is possible to make the central lines 19a of both the fitting holes 19 coincident with the vertical line Z.

As illustrated in FIG. 1, the spindle unit 5 for a rolling mill in the present embodiment includes a pair of the torque limiters 17 arranged between the speed reducer 4 and the fourth yokes 16. The torque limiters 17 interrupt transmission of rotary torque transmitted from the motor 3 to the first cross joint 11 and the second cross joint 12 when the rotary torque exceeds an upper limit. The torque limiters 17 will be described below.

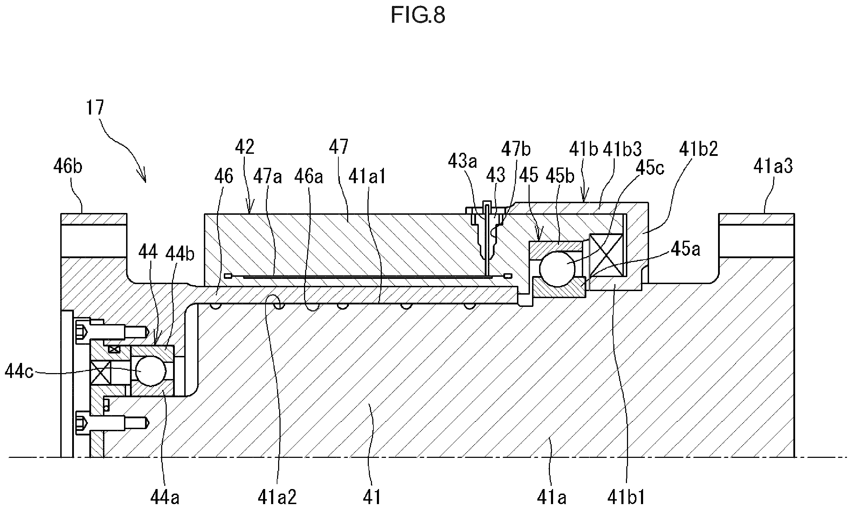

FIG. 8 is a sectional view that illustrates the torque limiter 17. As illustrated in FIG. 8, the torque limiter 17 includes a shaft member 41, a tubular member 42, shear valves 43, a first rolling bearing 44 and a second rolling bearing 45. The tubular member 42 is fitted on the shaft member 41. The shear valves 43 are attached to the tubular member 42. The first rolling bearing 44 and the second rolling bearing 45 are disposed between the shaft member 41 and the tubular member 42.

The shaft member 41 has a columnar shaft body portion 41a and an engagement portion 41b. The engagement portion 41b having an L-shaped section is fitted on the shaft body portion 41a. A helical groove 41a2 for preventing blocking of oil is formed in the outer periphery of the shaft body portion 41a so as to extend in a helical manner in the circumferential direction. A flange 41a3 is formed at one axial end portion of the shaft body portion 41 a. The flange 41a3 is coupled to the output shaft 4a of the speed reducer 4 so as to be rotatable together with the output shaft 4a. The engagement portion 41b has a first cylindrical portion 41b1, an annular portion 41b2 and a second cylindrical portion 41b3. The first cylindrical portion 41b1 is fitted on the shaft body portion 41a. The annular portion 41b2 extends radially outward from one axial end portion of the first cylindrical portion 41b1. The second cylindrical portion 41b3 extends in the axial direction from a radially outer end portion of the annular portion 41b2.

The tubular member 42 includes a first cylindrical member 46 and a second cylindrical member 47 fitted on the first cylindrical member 46. The first cylindrical member 46 is fitted on the shaft body portion 41a. Lubricant for preventing seizure is coated on and provided between an inner peripheral face 46a of the first cylindrical member 46 and an outer peripheral face 41a1 of the shaft body portion 41a. A flange 46b, to which one axial end of the coupling shaft 48 (refer to FIG. 1) is coupled so as to be rotatable together with the first cylindrical member 46, is formed at one axial end portion of the first cylindrical member 46. The other axial end portion of the coupling shaft 48 is press-fitted in a fitting hole (not illustrated) of the fourth yoke 16. One axial end portion of the second cylindrical member 47 is fitted in the second cylindrical portion 41b3 of the engagement portion 41b. The one axial end portion has an end face that is opposed to one axial side face of the annular portion 41b2 of the engagement portion 41b.

The first rolling bearing 44 is, for example, a ball bearing. The first rolling bearing 44 includes an inner ring 44a, an outer ring 44b and balls 44c. The inner ring 44a is fixedly fitted on the shaft body portion 41a. The outer ring 44b is fixedly fitted to the first cylindrical member 46. The balls 44c are disposed between the outer periphery of the inner ring 44a and the inner periphery of the outer ring 44b. The second rolling bearing 45 is, for example, a ball bearing. The second rolling bearing 45 includes an inner ring 45a, an outer ring 45b and balls 45c. The inner ring 45a is fixedly fitted on the shaft body portion 41a. The outer ring 45b is fixedly fitted to the second cylindrical member 47. The balls 45c are disposed between the outer periphery of the inner ring 45a and the inner periphery of the outer ring 45b. The first rolling bearing 44 and the second rolling bearing 45 support the shaft member 41 such that the shaft member 41 is rotatable relative to the tubular member 42 when the shaft member 41 is rotated relative to the tubular member 42.

The second cylindrical member 47 has a hydraulic pressure expansion chamber (fluid pressure expansion chamber) 47a that extends in the axial direction over the substantially full length of the second cylindrical member 47 and that is located in an inner peripheral side portion of the second cylindrical member 47. Oil is charged into the hydraulic pressure expansion chamber 47a via hydraulic couplers (not illustrated). The second cylindrical member 47 has a plurality of shear valve fitting holes 47b that open on the outer peripheral face of the second cylindrical member 47. The shear valve fitting holes 47b are located at prescribed intervals in the circumferential direction.

The shear valves 43 are fitted in the shear valve fitting holes 47b. One end portions of the shear valves 43 protrude radially outward from the outer peripheral face of the second cylindrical member 47, and are engaged with the second cylindrical portion 41b3 of the engagement portion 41b. Each shear valve 43 has a tube 43a extending along the axis of the shear valve 43. One end portion of the tube 43a is closed, and protrudes radially outward from the outer peripheral face of the second cylindrical member 47. The other end portion of the tube 43a is open and is communicated with one axial end portion of the hydraulic pressure expansion chamber 47a.

With the above-described configuration, when the oil is charged into the hydraulic pressure expansion chamber 47a from the hydraulic couplers via the shear valve fitting holes 47b to increase the pressure in the hydraulic pressure expansion chamber 47a, the hydraulic pressure expansion chamber 47a is expanded in the radial direction. Thus, the outer peripheral face 41a1 of the shaft member 41 and the inner peripheral face 46a of the first cylindrical member 46 are frictionally engaged with each other, and thus the rotary torque is transmitted between the shaft member 41 and the tubular member 42.

When the rotary torque transmitted between the shaft member 41 and the tubular member 42 exceeds the upper limit, the outer peripheral face 41a1 of the shaft member 41 slips with respect to the inner peripheral face 46a of the first cylindrical member 46, and thus the position of the tubular member 42 around the axis changes relative to the shaft member 41. Due to this position change, the radially outer end portions of the tubes 43a of the shear valves 43 are sheared by the second cylindrical portion 41b3, and thus the oil is discharged to the outside from the hydraulic pressure expansion chamber 47a via the shear valves 43. Thus, pressing force with which the inner peripheral face 46a of the first cylindrical member 46 presses the outer peripheral face 41a1 of the shaft member 41 is no longer applied. As a result, the frictional engagement between the shaft member 41 and the tubular member 42 is cancelled, and thus the transmission of the rotary torque is interrupted.

Both the first cross joint 11 and the second cross joint 12 have recessed portions 30 defined between the adjacent bearing cups 24 as described above, and the diameter of each insertion hole 25b needs to be decreased accordingly. Thus, the diameter of each of the bolts 31 passed through the insertion holes 25b is decreased. As a result, the stiffness of the junction between the first cross joints 11 and the first and second yokes 13, 14 and the stiffness of the junction between the second cross joint 12 and the third and fourth yokes 15, 16 are reduced. Further, the stiffness of each bolt 31 is reduced. However, in the present embodiment, transmission of excessive rotary torque between the speed reducer 4 and the fourth yokes 16 is prevented by the torque limiters 17. Thus, the first and second cross joints 11, 12 are effectively prevented from being broken by the excessive rotary torque.

Note that the invention is not limited to the above-described embodiments, and may be implemented in various modified embodiments. For example, in the above-described embodiments, the phase difference between the first cross joints 11 is set to 45 degrees. However, the phase difference may be set to any angle other than 45 degrees unless the first cross joints 11 do not contact each other. In the above-described embodiments, the invention is applied to the first yokes 13. Alternatively, the invention may be applied to the second yokes 14, the third yokes 15 or the fourth yokes 16.

With the spindle unit for a rolling mill according to the invention, even when one of the cross joints in one pair is disposed to enter the recessed portion of the other one of the cross joints, the yokes in one pair are interchangeable with each other

**Claims**

1.  A spindle unit (5) for a rolling mill (1) comprising:

    a pair of upper and lower drive shafts (10) disposed between a pair of upper and lower rolls (2) and a drive source (3) that rotates the rolls (2) in opposite directions;
    a pair of upper and lower cross joints (11, 12) disposed between the rolls (2) and the roll-side paired end portions (10a) of the drive shafts (10), or between the drive source (3) and the drive source-side paired end portions (10b) of the drive shafts (10); and
    a pair of upper and lower tubular yokes (13, 14, 15, 16) each having a connection portion (18) formed at one axial end portion of the corresponding yoke and connected to a corresponding one of the cross joints (11, 12), and each having a fitting hole (19) into which another member is press-fitted, the fitting hole (19) being formed in the other axial end portion of the corresponding yoke and the fitting hole (19) having a non-circular sectional shape around an axis (Y) of the corresponding yoke, wherein

    each of the cross joints (11, 12) includes a joint spider (21) that has four shaft portions (21b) arranged in a cross shape as a whole, the joint spider (21) being rotatable about a central axis (C) that coincides with the axis (Y) of the corresponding yoke, a plurality of rolling elements (23) that roll on outer peripheral faces (21b1) of the shaft portions (21b), four bottomed cylinder-shaped bearing cups (24) fitted respectively on the shaft portions (21b) via the rolling elements (23), and bearing holders (25) having fitting portions (25a) that are disposed between the bearing cups (24) adjacent to each other and to which the connection portion (18) of the corresponding yoke is fitted, recessed portions (30) are defined between the adjacent bearing cups (24) of each of the cross joints (11, 12) such that outer faces (25a1)of the fitting portions (25a) are recessed toward the central axis (C) from outer faces (24b2) of bottom portions (24b) of the bearing cups (24), and
    the cross joints (11, 12) are disposed with a prescribed phase difference in a rotational direction around the central axis (C) such that the outer face of one of the bearing cups (24) of one of the cross joints (11, 12) is inserted in one of the recessed portions (30) of the other one of the cross joints (11, 12),
    the spindle unit (5) for a rolling mill (1) **characterized in that** the yokes (13, 14, 15, 16) are formed such that formation positions of the fitting holes (19) with respect to the connection portions (18) coincide with each other, whereas the fitting holes (19) of the yoke are formed such that longitudinal central lines (19a) (prescribed central lines) thereof are tilted by a prescribed angle θ with respect to corresponding central axes (x1) of the two shaft portions (21b) on which the paired bearing holders (25), to which the corresponding yokes are connected, are disposed, in the same direction about the central axis (C).

2.  The spindle unit (5) for a rolling mill (1) according to claim 1, wherein prescribed central lines of the fitting holes (19) of the yokes (13, 14, 15, 16) are tilted by a prescribed angle in opposite directions around a vertical line under a condition that an axis (x1) of a pair of the shaft portions (21b) of one of the cross joints (11, 12) coincides with a vertical line (Z), the pair of the shaft portions (21b) being disposed on the same axis.

3.  The spindle unit (5) for a rolling mill (1) according to claim 2, wherein the phase difference is set to 45 degrees, and the prescribed angle is set to 22.5 degrees.

4.  The spindle unit (5) for a rolling mill (1) according to any one claims 1 to 3, further comprising a torque limiter (17) that interrupts transmission of rotary torque transmitted from the drive source (3) to the cross joints (11, 12) when the rotary torque exceeds an upper limit.


**Patentansprüche**

1.  Spindeleinheit (5) für ein Walzwerk (1), mit:

    einem Wellenpaar aus oberer und unterer Antriebswelle (10), welche zwischen einem Walzpaar aus oberer und unterer Walze (2) angeordnet sind und eine Antriebsquelle (3), die die Walzen (2) in entgegengesetzte Richtungen rotiert;
    einem Gelenkpaar aus oberem und unterem Kreuzgelenk (11, 12), welche zwischen den Walzen (2) und den walzenseitig gepaarten Endabschnitten (10a) der Antriebswellen (10), oder zwischen der Antriebsquelle (3) und den antriebsquellenseitig gepaarten Endabschnitten (10b) der Antriebswellen (10) angeordnet sind; und
    einem Gelenkpaar aus oberem und unterem röhrenförmigen Gelenkstück (13, 14, 15,16), wovon jedes einen Verbindungsabschnitt (18) aufweist, der an einem axialen Endabschnitt des entsprechenden Gelenkstücks ausgebildet und mit einem entsprechenden der Kreuzgelenke (11, 12) verbunden ist, und wovon jedes ein Passloch (19) aufweist, in welches ein anderes Teil eingepresst ist, wobei das Passloch (19) in dem anderen axialen Endabschnitt des entsprechenden Gelenkstücks ausgebildet ist und das Passloch (19) eine um eine Achse (Y) des entsprechenden Gelenkstücks nicht-kreisförmige Querschnittsform aufweist, wobei

jedes der Kreuzgelenke (11, 12) eine Gelenkspinne (21), die vier Wellenabschnitte (21 b) aufweist, die im Gesamten in einer Kreuzform angeordnet sind, wobei die Gelenkspinne (21) um eine Zentralachse (C) rotierbar ist, die mit der Achse (Y) des entsprechenden Gelenkstücks übereinstimmt, eine Vielzahl Wälzkörper (23), die auf äußeren Umfangsflächen (21 b1) der Wellenabschnitte (21 b) abwälzen, vier zylinderförmige Lagerschalen (24), die über die Wälzkörper (23) jeweils auf die Wellenabschnitte (21 b) aufgesetzt sind, und Lagerträger (25) beinhaltet, die Einpassabschnitte (25a) aufweisen, die zwischen den zueinander benachbarten Lagerschalen (24) angeordnet sind und in die der Verbindungsabschnitt (18) des entsprechenden Gelenkstücks eingepasst ist,
vertiefte Abschnitte (30) zwischen benachbarten Lagerschalen (24) von jedem der Kreuzgelenke (11, 12) derart angeordnet sind, dass äußere Flächen (25a1) der Einpassabschnitte (25a) von äußeren Flächen (24b2) der Bodenabschnitte (24b) der Lagerschalen (24) in Richtung zur Zentralachse (C) vertieft sind, und
die Kreuzgelenke (11, 12) mit einem vorgeschriebenen Phasenunterschied in einer Rotationsrichtung um die Zentralachse (C) derart angeordnet sind, dass die äußere Fläche von einer der Lagerschalen (24) von einem der Kreuzgelenke (11, 12) in einen der vertieften Abschnitte (30) des anderen der Kreuzgelenke (11, 12) eingesetzt sind, die Spindeleinheit (5) für ein Walzwerk (1) **dadurch gekennzeichnet ist, dass** die Gelenkstücke (13, 14, 15, 16) derart ausgebildet sind, dass Ausbildungspositionen der Passlöcher (19) bezogen auf die Verbindungsabschnitte (18) miteinander übereinstimmen, während die Passlöcher (19) der Gelenkstücke derart ausgebildet sind, dass deren längsverlaufenden Zentrallinien (19a) (vorgeschriebene Zentrallinien) bezogen auf entsprechende Zentralachsen (x1) der zwei Wellenabschnitte (21 b) in derselben Richtung um die Zentralachse (C) um einen vorgeschriebenen Winkel θ gekippt sind, auf denen die paarweisen Lagerträger (25), mit denen die entsprechenden Gelenkstücke verbunden sind, angeordnet sind.

2. Spindeleinheit (5) für ein Walzwerk (1) gemäß Anspruch 1, wobei vorgeschriebene Zentrallinien der Passlöcher (19) der Gelenkstücke (13, 14, 15, 16) um eine vertikale Linie in entgegengesetzter Richtung um einen vorgeschriebenen Winkel gekippt sind, unter der Bedingung, dass eine Achse (x1) eines Paars Wellenabschnitte (21 b) von einem der beiden Kreuzgelenke (11, 12) mit einer vertikalen Linie (Z) übereinstimmt, wobei das Paar Wellenabschnitte (21 b) auf derselben Achse angeordnet ist.

3. Spindeleinheit (5) für ein Walzwerk (1) gemäß Anspruch 2, wobei der Phasenunterschied auf 45° festgelegt ist und der vorgeschriebene Winkel auf 22,5° festgelegt ist.

4. Spindeleinheit (5) für ein Walzwerk (1) gemäß einem der Ansprüche 1 bis 3, ferner mit einem Drehmomentbegrenzer (17), der die Übertragung von Drehmoment unterbricht, welches von der Antriebsquelle (3) auf die Kreuzgelenke (11, 12) übertragen wird, wenn das Drehmoment eine obere Grenze übersteigt.

## Revendications

1. Unité de broche (5) pour un laminoir (1) comprenant :

une paire d'arbres d'entraînement (10) supérieur et inférieur disposés entre une paire de rouleaux (2) supérieur et inférieur et une source d'entraînement (3) qui fait tourner les rouleaux (2) dans des directions opposées ;
une paire de joints à croisillon (11, 12) supérieur et inférieur disposés entre les rouleaux (2) et les parties d'extrémité appariées côté rouleaux (10a) des arbres d'entraînement (10), ou entre la source d'entraînement (3) et les parties d'extrémité appariées côté source d'entraînement (10b) des arbres d'entraînement (10) ; et
une paire d'étriers tubulaires (13, 14, 15, 16) ayant chacun une partie de liaison (18) formée en une partie d'extrémité axiale de l'étrier correspondant et reliée à l'un correspondant des joints à croisillon (11, 12), et ayant chacun un trou d'ajustement (19) dans lequel un autre élément est ajusté à la presse, le trou d'ajustement (19) étant formé dans l'autre partie d'extrémité axiale de l'étrier correspondant et le trou d'ajustement (19) ayant une forme en section non circulaire autour d'un axe (Y) de l'étrier correspondant, dans laquelle

chacun des joints à croisillon (11, 12) inclut un croisillon de joint (21) qui a quatre parties d'arbre (21b) agencées en une forme de croix formant un tout, le croisillon de joint (21) pouvant tourner autour d'un axe central (C) qui coïncide avec l'axe (Y) de l'étrier correspondant, une pluralité d'éléments roulants (23) qui roulent sur des faces périphériques extérieures (21b1) des parties d'arbre (21b), quatre cuvettes de paliers (24) munies d'un fond en forme de cylindre ajustées respectivement sur les parties d'arbre (21b) par l'intermédiaire des éléments roulants (23), et des supports de paliers (25) ayant des parties d'ajustement (25a) qui sont disposées entre les cuvettes de paliers (24) adjacentes l'une à l'autre et sur lesquelles la partie de liaison (18) de l'étrier correspondant est ajustée, des parties en retrait (30) sont définies entre les cuvettes de paliers (24) adjacentes de chacun des joints à croisillon (11, 12) de telle manière que des faces extérieures (25a1) des parties d'ajustement (25a) sont en retrait vers l'axe central (C) depuis des faces extérieures (24b2) des parties de fond (24b) des cuvettes de paliers (24), et les joints à croisillon (11, 12) sont disposés avec une différence de phase prescrite dans une direction de rotation autour de l'axe central (C) de telle manière que la face extérieure de l'une des cuvettes de paliers (24) de l'un des joints à croisillon (11, 12) est insérée dans l'une des parties en retrait (30) de l'autre des joints à croisillon (11, 12), l'unité de broche (5) pour un laminoir (1) **caractérisée en ce que** les étriers (13, 14, 15, 16) sont formés de telle manière que des positions de formation des trous d'ajustement (19) par rapport aux parties de liaison (18) coïncident ensemble, alors que les trous d'ajustement (19) de l'étrier sont formés de telle manière que des lignes centrales longitudinales (19a) (lignes centrales prescrites) de ceux-ci sont inclinées d'un angle prescrit θ par rapport à des axes centraux correspondants (x1) des deux parties d'arbre (21b) sur lesquelles les support de paliers appariés (25), auxquels les étriers correspondant sont reliés, sont disposés, dans la même direction autour de l'axe central (C).

2. Unité de broche (5) pour un laminoir (1) selon la revendication 1, dans laquelle des lignes centrales prescrites des trous d'ajustement (19) des étriers (13, 14, 15, 16) sont inclinées d'un angle prescrit dans des directions opposées autour d'une ligne verticale dans un état où un axe (x1) d'une paire des parties d'arbre (21b) de l'un des joints à croisillon (11, 12) coïncide avec une ligne verticale (Z), la paires des parties d'arbre (21b) étant disposée sur le même axe.

3. Unité de broche (5) pour un laminoir (1) selon la revendication 2, dans laquelle la différence de phase est réglée à 45 degrés, et l'angle prescrit est réglé à 22,5 degrés.

4. Unité de broche (5) pour un laminoir (1) selon l'une quelconque des revendications 1 à 3, comprenant en outre un limiteur de couple (17) qui interrompt la transmission d'un couple de rotation transmis depuis la source d'entraînement (3) aux joints à croisillon (11, 12) quand le couple de rotation dépasse une limite supérieure.

FIG.1

# FIG.2

## FIG.3

FIG.4

FIG.5

FIG.6

# FIG.7

FIG.8

# FIG.9

## FIG.10

## FIG.11

# FIG.12

**EP 2 835 186 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000042614 A
- JP H07256311 A
- EP 1460295 A2
- JP 2013058992 A